# EUROPÄISCHE PATENTSCHRIFT

(11) **EP 2 385 540 B1**
(45) Veröffentlichungstag und Bekanntmachung des Hinweises auf die Patenterteilung: **08.07.2015**
(21) Anmeldenummer: 11164514.9
(22) Anmeldetag: 03.05.2011
(51) Int. Cl.: H01H 85/20

(54) **Sicherungsaufnahmevorrichtung, insbesondere für Anschlusskästen von Photovoltaikanlagen**
Fuse holder device, in particular for connection boxes on photovoltaic assemblies
Dispositif de réception de sécurité, notamment pour boîtes de raccordement d'installations photovoltaïques

(30) Priorität: 06.05.2010 DE 102010028679
(43) Veröffentlichungstag der Anmeldung: 09.11.2011
(73) Patentinhaber: Wöhner GmbH & Co. KG Elektrotechnische Systeme, 96472 Rödental (DE)
(72) Erfinder: Büttner, Alex, 96472, Rödental (DE)
(74) Vertreter: Isarpatent

(56) Entgegenhaltungen:
- EP-A2- 1 109 192
- EP-A2- 1 251 537
- WO-A1-2004/073127
- DE-C1- 4 329 428

## Beschreibung

Die Erfindung betrifft eine Sicherungsaufnahmevorrichtung, insbesondere für Anschlusskästen von Photovoltaikanlagen.

Eine Sicherungsaufnahmevorrichtung der eingangs genannten Art weist einen Befestigungssteg auf, an dem stirnseitig Aufnahmekontaktabschnitte zur Aufnahme von Kontaktmessern von Sicherungen vorgesehen sind. Derartige Sicherungsaufnahmevorrichtungen beinhalten an den Stirnseiten Isolierkappen, innerhalb welcher die Aufnahmekontaktabschnitte angeordnet sind und die Öffnungsschlitze zur Durchführung der Kontaktmesser der betreffenden Sicherungselemente enthalten. Bei derartigen Sicherungsaufnahmevorrichtungen, die mit Ausnahme der Aufnahmekontaktabschnitte aus Kunststoff bestehen, wird der Befestigungssteg mit diesen überdeckenden Metallplatten im Anschlusskasten befestigt. Ein Pol der Sicherungsaufnahmevorrichtung ist hierbei direkt auf eine Stromsammelschiene aufgesetzt und mit dieser verschraubt, während der andere Pol mit jeweils einer Leitung in Verbindung steht, die durch ein externes Bauteil, beispielsweise einen Wandler, geführt wird, wobei der Wandler zur Messung des zugeführten Stromes dient. Die Stromsammelschiene befindet sich hierbei außerhalb der Sicherungsaufnahmevorrichtung.

Die EP 1 109 182 A2 zeigt einen Stromleiter für Stromwandler einer NH-Sicherungseinrichtung oder NH-Sicherungs-Lastschalteinrichtung.

Die DE 43 29 428 C1 zeigt ein Installationsgerät für Sammelschienen eines Sammelschienensystems.

Die EP 1 251 537 A2 zeigt einen Sichrungslasttrennschalter in Leistenbauform.

Die WO 2004/073127 A1 zeigt eine Schutzschaltereinrichtung.

Der Erfindung liegt die Aufgabe zugrunde, eine Sicherungsaufnahmevorrichtung zu schaffen, die eine kompakte Anordnung, z. B. innerhalb eines Anschlusskastens, ermöglicht und die andererseits die Unterbringung eines Wandlers gestattet.

Diese Aufgabe wird erfindungsgemäß durch die Merkmale des unabhängigen Anspruchs gelöst.

Weitere Gestaltungen der Sicherungsaufnahmevorrichtung ergeben sich aus den Unteransprüchen.

Eine weitere Ausgestaltung ist dadurch gekennzeichnet, dass die Steckeinrichtung durch von dem Halteelement abstrebende Zungen gebildet ist.

Gemäß einer weiteren Ausführungsform ist vorgesehen, dass das Halteelement bei Eingriff mit dem Befestigungssteg im Wesentlichen in der Ebene des Befestigungssteges angeordnet ist.

Eine weitere Ausgestaltung ist dadurch gekennzeichnet, dass an der dem Halteelement zugewandten Seite des Befestigungssteges eine Kontaktzunge vorgesehen ist, die über den Befestigungssteg vorsteht.

Entsprechend einer weiteren Ausführungsform ist beabsichtigt, dass die vom Befestigungssteg abstehende Kontaktzunge eine Öffnung aufweist.

Gemäß einer bevorzugten Ausführungsform ist vorgesehen, dass das Halteelement mit einer Befestigungseinrichtung versehen ist zur Aufnahme von Schraubmitteln oder dergleichen.

Eine weitere Ausgestaltung ist dadurch gekennzeichnet, dass das Halteelement als Befestigungseinrichtung eine in einen Befestigungsblock eingesetzte Mutter aufweist, die zur Aufnahme von Schraubmitteln dient, die durch die Öffnung der Kontaktzunge durchgeführt sind.

Entsprechend einer weiteren Ausführungsform ist beabsichtigt, dass das Halteelement weitere Befestigungsmittel aufweist.

Gemäß einer bevorzugten Ausführungsform ist vorgesehen, dass an dem Halteelement ein Bauteil, vorzugsweise ein Wandler angeordnet ist, der durch die Befestigungsmittel gegenüber einer Basisplatte des Halteelementes gesichert ist.

Entsprechend einer weiteren Ausführungsform ist vorgesehen, dass der Befestigungssteg mit einer Steckaufnahme versehen ist, die zur Aufnahme der Steckeinrichtung ausgebildet ist.

Gemäß einer weiteren Ausgestaltung ist beabsichtigt, dass die von dem Befestigungssteg vorstehende Kontaktzunge im Wesentlichen senkrecht und zur Ebene der Stromsammelschiene beabstandet angeordnet ist und mit einem der Aufnahmekontaktabschnitte in elektrischer Verbindung steht.

Eine weitere Ausgestaltung ist dadurch gekennzeichnet, dass die Nut zur Aufnahme der Stromsammelschiene quer zur Längsachse des Befestigungsstegs ausgerichtet ist.

Gemäß einer bevorzugten Ausführungsform ist vorgesehen, dass die in die Nut eingesetzte Kontaktzunge etwa Z-förmig ausgebildet und sowohl mit einem Kontaktabschnitt als auch mit der Stromsammelschiene in elektrischer Verbindung steht.

Die Erfindung ermöglicht eine außerordentlich kompakte Anordnung der Sicherungsaufnahmevorrichtung innerhalb eines Anschlusskastens, wobei üblicherweise mehrere derartiger Sicherungsaufnahmevorrichtungen parallel nebeneinander angeordnet sind, dadurch, dass die Stromsammelschiene in der Nähe des betreffenden Pols über den jeweiligen Befestigungssteg geschoben wird und die Stromsammelschiene bzw. Sammelschiene innerhalb der Längsdimensionierung der Sicherungsaufnahmevorrichtung zu liegen kommt. Ausgangsseitig der Sicherungsaufnahmevorrichtung ist ein Halteelement vorgesehen, welches lösbar gegenüber dem Befestigungssteg ist und einen Wandler aufnimmt, der bei Eingriff zwischen dem Befestigungssteg und dem Halteelement fest gegenüber der Sicherungsaufnahmevorrichtung bzw. der darin eingesetzten Sicherung angeordnet ist.

Bei einer bevorzugten Ausgestaltung der erfindungsgemäßen Sicherungsaufnahmevorrichtung befindet sich an einer Stirnseite und parallel zum Befestigungssteg eine Kontaktzunge, die mit dem zugehörigen, nächstliegenden Aufnahmekontaktabschnitt in stromführender Verbindung steht. Die Kontaktzunge ragt über den Befestigungssteg vor und wird beim in Eingriff bringen des Halteelements gegenüber der Sicherungsaufnahmevorrichtung durch den Wandler hindurch verschoben bei gleichzeitigem Ansetzen des Halteelements am Befestigungssteg. Das freistehende Ende der Kontaktzunge ist vorzugsweise mit einer Bohrung versehen, die in Flucht zu einer im Halteelement befindlichen Mutter gebracht wird, sodass nach dem Ansetzen des Halteelements an dem Befestigungssteg der Sicherungsaufnahmevorrichtung mittels einer Schraube die Kontaktzunge fest mit der betreffenden Mutter des Halteelements verbunden werden kann, was gleichzeitig eine feste Anordnung des Halteelements gegenüber dem Befestigungssteg gewährleistet.

Die über den Aufnahmekontaktabschnitten befindlichen Isolierkappen sind vorzugsweise abnehmbar gegenüber dem Befestigungssteg vorgesehen und werden durch Aufklipsen mithilfe einer Rasteinrichtung fest an dem Befestigungssteg angeordnet. Auf diese Weise sind die Aufnahmekontaktabschnitte nach außen hin berührungssicher gestaltet.

Nachfolgend wird eine bevorzugte Ausführungsform der erfindungsgemäßen Sicherungsaufnahmevorrichtung zur Erläuterung weiterer Merkmale beschrieben. Es zeigen:
- Figur 1:: eine Perspektivansicht einer Sicherungsaufnahmevorrichtung gemäß der Erfindung,
- Figur 2:: eine Perspektivansicht der Sicherungsaufnahmevorrichtung, wobei das Halteelement vom Befestigungssteg entfernt ist und die Isolierkappen sowie ein Wandler entfernt sind zur Verdeutlichung des Aufbaus der erfindungsgemäßen Sicherungsaufnahmevorrichtung,
- Figur 3:: eine Figur 1 entsprechende, Einzelheiten darstellende Ansicht,
- Figur 4:: eine Ansicht des Halteelements, von hinten gesehen,
- Figur 5:: eine Perspektivansicht der Sicherungsaufnahmevorrichtung, gegenüber Figur 1 um 180° gedreht.

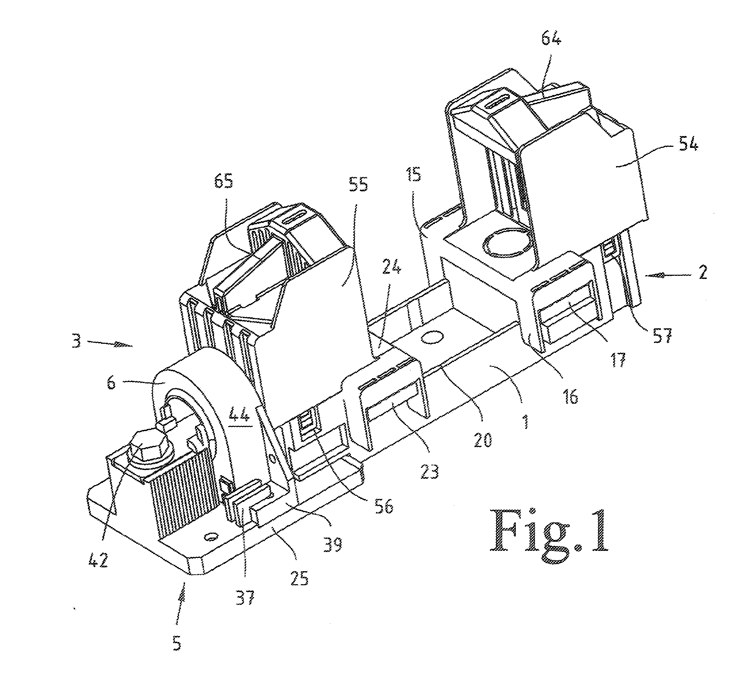

Unter Bezugnahme auf die Figuren 1 bis 5 wird nachfolgend eine bevorzugte Ausführungsform einer Sicherungsaufnahmevorrichtung beschrieben, die sich insbesondere für Anschlusskästen von Photovoltaikanlagen eignet. Derartige Sicherungsaufnahmevorrichtungen werden paarweise oder mehrfach parallel nebeneinanderliegend vorgesehen und stehen mit einer Stirnseite mit einer Stromsammelschiene in Verbindung, während die andere Stirnseite zu einem Stromerzeuger mittels eines Anschlusskabels geführt ist oder auf einen sogenannten Teilgeneratoranschlusskasten (TGA) angeschlossen ist.

Die erfindungsgemäße Sicherungsaufnahmevorrichtung besteht aus einem Befestigungssteg 1, an dem an seinen Stirnseiten 2, 3 noch näher zu beschreibende Aufnahmekontaktabschnitte ausgebildet sind, die zur Aufnahme von Kontaktmessern eines in den Figuren nicht dargestellten Sicherungselementes dienen. In Figur 1 ist auf der linken Seite ein Halteelement 5 gezeigt, welches zur Halterung vorzugsweise eines elektrischen oder elektronischen Bauteils, beispielsweise in Form eines Wandlers 6 dient. Das Halteelement 5 ist an dem Befestigungssteg 1 seitlich angesetzt, d. h. in Längsrichtung der Achse des Befestigungsstegs 1 vorgesehen und mit dem Befestigungssteg 1 in noch zu beschreibender Weise fest verbunden.

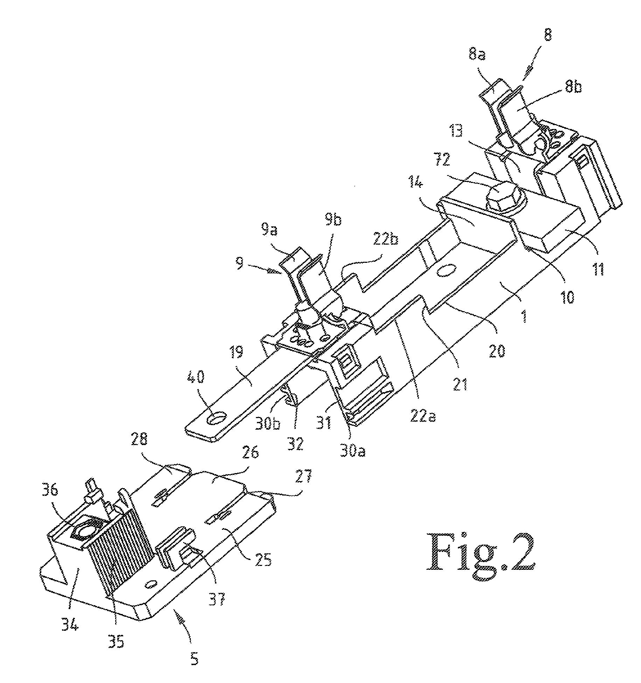

Wie aus Figur 2 hervorgeht, sind stirnseitig des Befestigungssteges 1 Aufnahmekontaktabschnitte 8, 9, vorzugsweise in Form von Lyrakontakten vorgesehen, die zur Aufnahme von Kontaktmessern üblicher Sicherungen dienen. Übliche und hier zu verwendende Sicherungen sind stirnseitig jeweils mit einem Messerkontakt versehen, derart, dass beim Einsetzen der Sicherungen in die erfindungsgemäße Sicherungsaufnahmevorrichtung die Kontaktmesser zwischen die mit 8a, 8b bzw. 9a, 9b bezeichneten Einzelkontakte eingeführt werden.

Gemäß Figur 1 ist in dem Befestigungssteg 1 eine quer zur Achsrichtung des Befestigungsstegs 1 verlaufende Nut 10 ausgebildet, die zur Aufnahme einer Stromsammelschiene 11 dient, wobei die Stromsammelschiene bzw. Stromschiene 11 über mehrere parallel zueinander angeordnete Sicherungsaufnahmevorrichtungen hinweggeführt ist und damit als gemeinsame Stromschiene vorgesehen ist.

Zur Kontaktierung der Stromsammelschiene 11 dient eine vorzugsweise Z-förmige Kontaktzunge 13, die zwischen der Stromsammelschiene 11 und dem Aufnahmekontaktabschnitt 8 vorgesehen ist. Bei der dargestellten, bevorzugten Ausführungsform wird die Nut 10 durch eine Querwand 14 seitlich begrenzt. Zur Abdeckung der Stromsammelschiene 11 in Bezug auf die dargestellte Sicherungsaufnahmevorrichtung dient eine Kappe 15 (Figur 1), die mit Füßen 16 die Querwand 14 und die Stromsammelschiene 11 übergreift, zumindest teilweise übergreift und seitlich mit einem Ausgleichssteg 17 versehen ist, der im Falle einer Stromsammelschiene 11 größerer Stärke oder bei Einsatz zweier, übereinander angeordneter Stromsammelschienen weggebrochen werden kann.

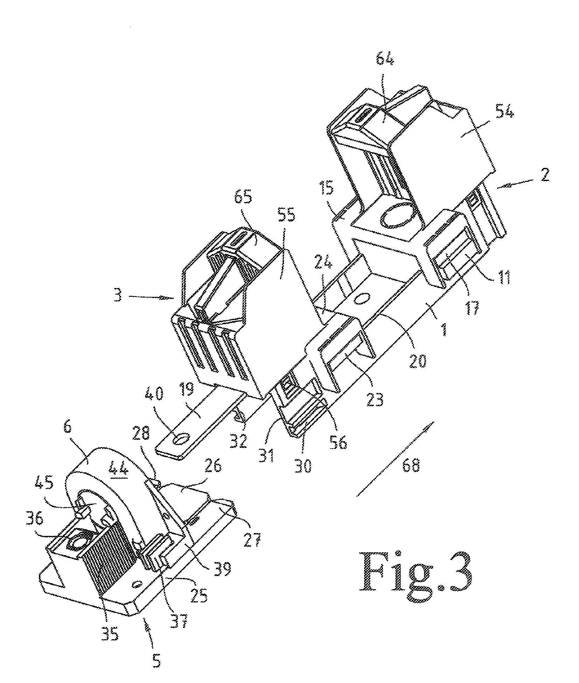

Bei Photovoltaikanlagen größerer Größenordnung mit einer entsprechend höheren Zahl von Sicherungsaufnahmevorrichtungen können anstelle einer Stromsammelschiene 11 auch zwei übereinander liegend montierte Stromsammelschienen vorgesehen werden, zu welchem Zweck der an der Kappe 15 bzw. 24 befindliche Ausgleichsteg 17 (nur in Bezug auf die Kappe 15 in Fig. 3 gezeigt) weggebrochen werden kann, der an der Kappe 15 an deren Stirnwand angespritzt ist. Der Ausgleichssteg 17 steht, wie die Figuren zeigen, senkrecht zur Achse der Kappe 15 bzw. 24. Die Kappe 15 bzw. 24 ist insgesamt im Querschnitt betrachtet etwa U-förmig gestaltet und weist seitlich einen Ausschnitt 75 auf, der es ermöglicht, die Kappe 15 bzw. 24 auf den Befestigungssteg 1 aufzusetzen. Die seitlich den Befestigungssteg 1 übergreifend angeordneten Füße sind in Fig. 3 mit 15a, 15b bezeichnet.

Auf der dem Aufnahmekontaktabschnitt 8 gegenüberliegenden Seite ist der mit 9 bezeichnete Aufnahmekontaktabschnitt vorgesehen, der ebenfalls zwei weitgehend parallel zueinander verlaufende Kontakte 9a, 9b aufweist. Dieser Aufnahmekontaktabschnitt 9 beinhaltet eine Kontaktzunge 19, die von der Stirnseite 3 des Befestigungssteges 1 vorsteht und eine vorbestimmte Länge hat, wie dies nachstehend noch beschrieben wird. Die Kontaktzunge 19 verläuft quer zur Stromsammelschiene 11 in einem vorgegebenen Abstand zur Unterkante des Befestigungssteges 1.

Der Befestigungssteg 1 weist neben der Nut 10 eine weitere Nut 20 auf, der eine Stufe 21 folgt, an die sich parallel zueinander verlaufende Stegabschnitte 22a, 22b anschließen. Die Stegabschnitte 22a, 22b liegen oberhalb der Nut 10 und nehmen gegebenenfalls eine Stromsammelschiene 23 auf, die durch eine Kappe 24 abgedeckt ist, wie dies in Verbindung mit der Kappe 15 beschrieben ist und in Figur 1 dargestellt ist. Mit dieser Ausführungsform lässt sich die Sicherungsaufnahmevorrichtung durch die an beiden Stirnseiten mögliche Anordnung von Stromsammelschienen variabel verwenden, gegebenenfalls auch ohne Kontaktzunge 19 und ohne Halteelement 5. Grundsätzlich kann damit die erfindungsgemäße Sicherungsaufnahmevorrichtung auch ohne Halteelement 5 verwendet werden und in diesem Fall kann die Stromsammelschiene an einer der beiden Stirnseiten der Sicherungsaufnahmevorrichtung alternativ eingesetzt werden. Darüber hinaus können anstelle nur einer Stromsammelschiene 11, wie in Figur 1 und 2 dargestellt, zwei derartige Stromsammelschienen übereinanderliegend oder auch eine Stromsammelschiene doppelter Stärke vorgesehen werden, wobei in letzterem Falle der Ausgleichssteg 17 der Kappe 15 wegzubrechen ist.

Das Halteelement 5 weist entsprechend den Figuren 1 und 2 eine Basisplatte 25 auf, an welcher Befestigungszungen 26, 27, 28 ausgebildet sind, die zum Einschieben in entsprechend gebildete Nuten am Befestigungssteg 1 vorgesehen sind. Bei der dargestellten Ausführungsform dienen die Befestigungszungen 27, 28 dazu, in seitliche Nuten 30 am Befestigungssteg 1 eingeführt zu werden, während die mittige Befestigungszunge 26 zwischen mit 31 und 32 bezeichneten Wänden des Befestigungssteges 1 eingeschoben wird. Die Befestigungszungen 27, 28 liegen etwa in der Ebene, die durch die Basisplatte 25 definiert ist und stehen von der Basisplatte 25 ab in Richtung auf den Befestigungssteg 1.

Wie aus den Darstellungen nach Figur 1 und 2 hervorgeht, ist bei einer bevorzugten Ausführungsform lediglich eine Stromsammelschiene 11 als Verbindung zwischen gleichen Polen mehrerer Sicherungsaufnahmevorrichtung vorgesehen, während auf der gegenüberliegenden Seite, z. B. bei Einsatz eines Wandlers auf dem Halteelement 5 ein Kabelanschluss ausgebildet ist.

Das Halteelement 5 weist auf seiner Platte 25 nach oben abstehend eine Befestigungseinrichtung 34, vorzugsweise einen Befestigungsblock 34 auf, der gemäß einer bevorzugten Ausgestaltung seitlich geriffelt ist, wie dies durch die geriffelte Fläche 35 in Figur 2 veranschaulicht ist, deren Zweck es ist, das Halteelement 5 mit den Fingern leicht in Richtung des Befestigungssteges 1 bzw. vom Befestigungssteg 1 wegschieben bzw. -ziehen zu können. In dem Befestigungsblock 34 befindet sich in vertikaler Ausrichtung zur Platte 25 eine Schraubmutter 36. Weiterhin sind an der Basisplatte 25 Anschläge oder Begrenzungselemente 37 ausgebildet.

Die Schraubmutter 36 sitzt formschlüssig in dem Befestigungsblock 34, der von der Basis 25 nach oben absteht und mit einer die Schraubmutter 36 aufnehmenden, vorzugsweise mehrkantigen Aussparungen versehen ist.

Figur 1 zeigt das Halteelement 5 zusammen mit einem Wandler 6, der derart auf die Basis 25 aufgeschoben ist, dass er mit Füßen 39 unter die Anschlag- bzw. Begrenzungselemente 37 verlagert ist und mittels der Anschlag- bzw. Begrenzungselemente 37 fest gegenüber der Basis 25 gehalten wird. Sobald das Halteelement 5 entsprechend Figur 1 gegenüber dem Befestigungssteg 1 in Eingriff mit diesem verlagert ist, stehen die Füße 39 des Wandlers 6 in Eingriff mit den Anschlag- bzw. Begrenzungselementen 37, die etwa L-förmig ausgebildet und in der Figur 1 und 2 gezeigten Weise in Richtung auf den Befestigungssteg 1 gerichtet sind. Weiterhin ist in dem in Figur 1 gezeigten Zustand die Kontaktzunge 19 durch den Wandler 6 hindurchgeführt, und zwar so weit, dass die mit 40 bezeichnete Bohrung gegenüber der Schraubmutter 36 fluchtet und die Kontaktzunge 19 mittels einer Schraube bzw. einem Schraubbolzen 42 an dem Befestigungsblock 34 durch Einschrauben in die Mutter 36 befestigt wird. Die Schraube bzw. der Schraubbolzen 42 dient bei der dargestellten Ausführungsform nicht nur der Befestigung der Haltezunge 19 an der Befestigungseinrichtung 34, sondern vorzugsweise zugleich der Befestigung einer Kontaktöse, die mit einem in den Figuren nicht weiter gezeigten Kabel verbunden ist, welches von einem Stromerzeuger bzw. von Photovoltaikelementen zugeführt wird. Die Kontaktzunge 19 dient dabei als Eingang zur erfindungsgemäßen Sicherungsaufnahmevorrichtung, wobei der über die Kontaktzungen 19 aufgenommene Strom durch den die Kontaktzunge 19 umgebenden Wandler 6 erfasst wird und der gemessene Stromwert über ein vom Wandler weggeführtes Kabel zu einer Messstation oder dergleichen geführt wird.

Figur 3 zeigt eine Figur 1 entsprechende Darstellung, in welcher sich das Halteelement 5 gegenüber dem Befestigungssteg 1 außer Eingriff befindet. Gleiche Bezugszeichen in Figur 3 bezeichnen gleiche Teile, wie sie in Figur 1 und 2 erläutert sind.

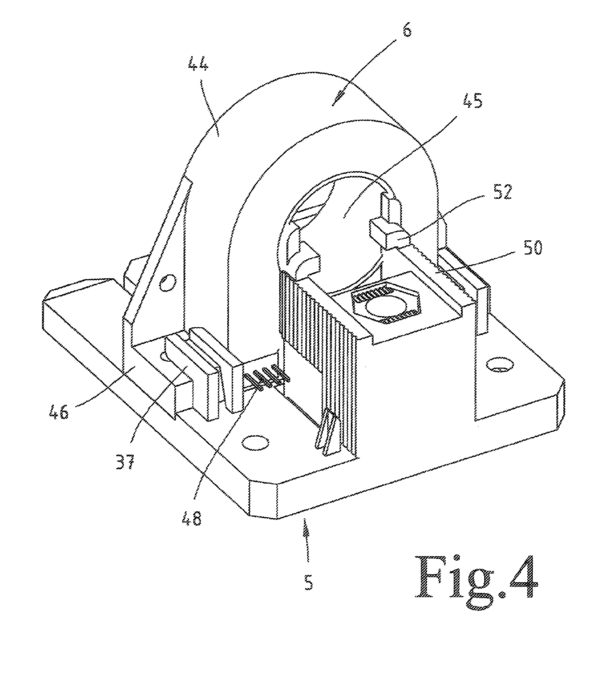

Figur 4 zeigt eine Rückseitenansicht des erfindungsgemäßen Halteelements zusammen mit dem darauf aufgesetzten Wandler 6. Wie vorstehend erwähnt, kann anstelle eines Wandlers 6 auch ein anderes, elektronisches Bauteil Anwendung finden, welches auf das Halteelement 5 aufgesetzt wird. Das in Figur 4 gezeigte Ausführungsbeispiel beinhaltet ein Halteelement 5 mit einem Wandler 6, der innerhalb eines Gehäuses 44 mit kreisförmiger Ausnehmung 45 vorgesehen ist und wobei das Gehäuse 44 seitliche Schenkel 46 aufweist, die der Befestigung mithilfe der Anschlag- bzw. Begrenzungselemente 37 dienen, wobei die Schenkel 46 im Wesentlichen L-förmig ausgebildet sind entsprechend der Formgebung der Anschlag- bzw. Begrenzungselemente 37. An der Rückseite des Gehäuses 44 befinden sich Anschlusskontakte, die allgemein mit 48 bezeichnet sind und zum Anschluss eines Kabels dienen. Diese Anschlüsse 48 dienen zur Aufnahme eines Steckers mit Leitung, die über eine Zugentlastung 49 auf die Basisplatte 25 aufgelegt wird.

Oberhalb des Befestigungsblockes 34 befindet sich eine Führungsmatrix 50 sowie gegebenenfalls zusätzliche Führungsnasen 52, die dazu dienen, die Kontaktzunge 19 beim Aufschieben des Halteelements 5 auf den Befestigungssteg 1 exakt zu führen und auch zu haltern. Die Führungsmatrix 50 kann entweder aus senkrecht vom Befestigungsblock 34 abstehenden Schenkeln oder L-förmigen Führungen bestehen.

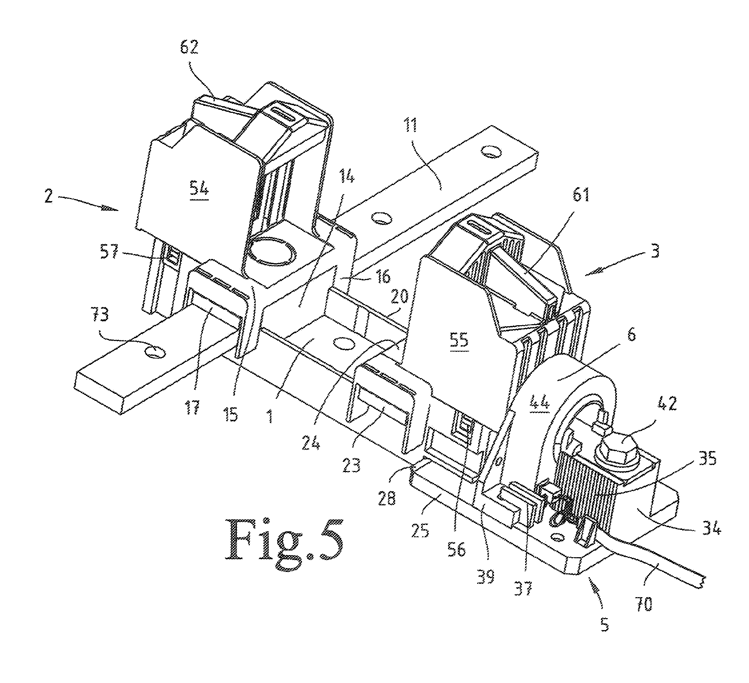

Aus den Figuren 1 bis 3 ist ersichtlich, dass die Aufnahmekontaktabschnitte 8, 9 durch Kappen 54, 55 weitgehend abgeschlossen bzw. isoliert sind, wobei die Kappen 54, 55 auf den Befestigungssteg 1 aufgeklipst werden. Zu diesem Zweck weisen die Kappen 54, 55 seitlich und nach unten abstehende Zungen 56, 57 auf, die gegenüber am Befestigungssteg 1 vorstehenden Rastzähnen 58, 59 verrastet werden. Wie aus Figur 5 ersichtlich ist, sind die Kappen 54, 55 mit Öffnungsschlitzen 61, 62 versehen, durch welche die Kontaktmesser der jeweiligen Sicherungen zusammen mit der Sicherung eingeführt werden, um in elektrischen Kontakt mit den Aufnahmekontaktabschnitten 8, 9 zu gelangen. Nach dem Einsetzen der Sicherungen werden die Kappen 54, 55 gegebenenfalls durch zusätzliche Hauben 64, 65 nach oben abgeschlossen, sodass die Sicherungen mit ihren Kontaktmessern berührungssicher abgedeckt sind. Zum Zwecke der Entnahme einer Sicherung sind demzufolge die Hauben 64, 65 gegenüber den Kappen 54, 55 abzuheben, wonach die jeweilige Sicherung im Bedarfsfall entnommen werden kann.

Die Kappen 54, 55 haben vorzugsweise eine Breite, die der Breite des Befestigungssteges 1 entspricht und die kleiner ist als die Länge der darunter befindlichen Kappe 15 bzw. 24. Bei einer bevorzugten Ausgestaltung der Sicherungsaufnahmevorrichtung ist die in Querrichtung zum Steg 1 festgelegte Länge der Kappen 15 bzw. 24 so gewählt, dass beim Abheben der Kappen 54, 55 gewährleistet ist, dass ein Zugang zu den darunter befindlichen Stromschienen verhindert wird, d.h. ein hinreichend guter Berührungsschutz gewährleistet ist. Die Kappen 54, 55 sind mit in Längsrichtung des Befestigungssteges 1 verlaufenden Schlitzen 61, 62 versehen, die einen Zugang zu den darunter befindlichen Lyra-Kontakten ermöglichen.

Zur Montage des Halteelementes 5 an dem Befestigungssteg 1 ist das Halteelement 5 zusammen mit dem Wandler 6 entsprechend Figur 3 in Richtung des Pfeils 68 zu verlagern, derart, dass die Kontaktzunge 19 in die für die Kontaktzunge 19 vorgesehene Führungsmatrix 50 und unter den Führungsnasen 52 hindurchgeleitet, bis das Halteelement 5 mit seinen Befestigungszungen 26 bis 28 in Eingriff gebracht wird mit dem Befestigungssteg 1 und die Bohrung 40 der Kontaktzunge 19 gegenüber der Schraubmutter 36 fluchtet. Durch Einschrauben des Schraubbolzens 42 wird das Halteelement 5 an dem Befestigungssteg 1 gehalten.

Das Halteelement 5 mit seiner Basisplatte 25 befindet sich im endmontierten Zustand gemäß Figur 1 stirnseitig am Befestigungssteg 1 derart, dass der nach unten weisende Boden des Halteelements 5 der unteren Kante des Befestigungssteges 1 entspricht, d. h. dass beide Teile in einer Ebene liegen und das Halteelement 5 als einzelnes Element fest mit dem Befestigungssteg 1 verbunden ist.

Figur 5 zeigt eine perspektivische Darstellung der erfindungsgemäßen Sicherungsaufnahmevorrichtung mit dem Befestigungssteg 1, der Stromsammelschiene 11, den Kappen 54, 55 mit den Öffnungsschlitzen 61, 62, dem Wandler 6 und einem mit 70 bezeichneten Kabelanschluss ausgangsseitig des Wandlers 6. Der Kabelanschluss 70 ist direkt mit dem Wandler 6 verbunden und liefert, wie oben erläutert, den erfassten Stromwert an eine Messstation. Gemäß Figur 5 ist der Wandler 6 durch die L-förmigen Anschläge 37 auf der Platte 25 gehaltert. In Figur 5 sind die Kappen 64, 65 entfernt, welche die Öffnungsschlitze 61, 62 nach eingeführter Sicherung zusätzlich abdecken können.

Die erfindungsgemäße Sicherungsaufnahmevorrichtung dient vorzugsweise als Sicherungsunterteil für NH-Sicherungen mit einem Zu- und Abgangskontakt und einem Halteelement 5 zur Aufnahme eines Wandlers 6, der zur Strommessung eingangsseitig der Sicherungsaufnahmevorrichtung fest angeordnet ist. Abgangsseitig ist bei der erfindungsgemäßen Sicherungsaufnahmevorrichtung eine Stromsammelschiene 11 vorgesehen, die alle Einzelströme aus den vorgeschalteten Stromerzeugern sammelt und über eine Leitung einem Wechselrichter zuführt. Die Kontaktzunge 19 ist gemäß Figur 2 nicht nur durch den Wandler 6 hindurchgeführt, sondern zugleich mit dem Aufnahmekontaktabschnitt 9 elektrisch verbunden, der zu einem Pol der einzusetzenden Sicherung führt.

Obgleich die dargestellte Ausführungsform nur zugangsseitig für den Anschluss eines Kabelschuhs vorgesehen ist, kann anstelle der Stromsammelschiene 11 auch auf der anderen Seite der Sicherungsaufnahmevorrichtung ein Kabelschuhanschluss vorgesehen sein.

Bei der erfindungsgemäßen Sicherungsaufnahmevorrichtung ist bei Einsatz einer Stromsammelschiene 11 der in Figur 1 und 2 gezeigten Art die Stromsammelschiene innenliegend und im Bereich der Sicherungsaufnahmevorrichtung durch Abdeckungen berührungssicher abgedeckt.

Aus den Zeichnungen ergibt sich weiterhin, dass die Kontaktzunge 13 von der Stromsammelschiene 11 bis zum Kontaktabschnitt 8 etwa Z-förmig verläuft. Im Bereich der Stromsammelschiene 11 ist bei einer bevorzugten Ausführungsform der unterhalb der Stromsammelschiene 11 befindliche Abschnitt der Kontaktzunge 13 mit einer Öffnung bzw. Bohrung versehen, wodurch es nötig ist, eine Schraubbolzen 72 (Figur 2) zur Befestigung der Stromsammelschiene 11 durch die Stromsammelschiene 11 hindurch zu Schrauben, um den Schraubbolzen 72 mit einer unter dem Befestigungssteg 1 befindlichen Mutter zu verschrauben. Zu diesem Zweck weist die Stromsammelschiene 11, wie aus Figur 5 ersichtlich ist, mehrere Durchgangsbohrungen 73 auf.

Die erfindungsgemäße Sicherungsaufnahmevorrichtung besteht mit Ausnahme der Kontaktabschnitte und Kontaktzungen etc. aus einem isolierenden Material, vorzugsweise Kunststoff. Die Kontaktabschnitte und Kontaktzungen sind gegenüber dem Grundkörper der Sicherungsaufnahmevorrichtung verrastet oder verschraubt. Das Halteelement 5 besteht ebenfalls vorzugsweise aus Kunststoff.

Die als Berührungsschutz vorgesehenen isolierenden Kappen 15, 24 haben, wie aus Fig. 1 ersichtlich ist, im Wesentlichen U-förmiges Profil und sind stirnseitig mit den Füßen 15a, 15b versehen, die derart beabstandet sind, dass sie den Befestigungssteg 1 übergreifen und an dem Befestigungssteg 1 seitlich in Anlage gelangen, vorzugsweise verrastend mit den Außenflächen des Befestigungssteges 1 in Eingriff gelangen können. Die Befestigungsstege 17, die vorzugsweise beidseitig jeder Kappe 15, 24 vorgesehen sind und mit den Außenflächen der Füße 16 fluchten, verlaufen somit quer zur jeweiligen U-förmig gestalteten Kappe 15, 24.

Ersichtlicherweise kann die in Querrichtung verlaufende Länge der Kappen 15 größer als in Fig. 1 dargestellt gewählt sein, um den Berührungsschutz noch weiter zu verbessern.

## Patentansprüche

1. Sicherungsaufnahmevorrichtung mit einem Befestigungssteg (1) und stirnseitig am Befestigungssteg (1) angeordneten Aufnahmekontaktabschnitten (8, 9) für Kontaktmesser von Sicherungen, mit Isolierkappen (54, 55), die auf den Befestigungssteg (1) aufgesetzt sind und die Aufnahmekontaktabschnitte (8, 9) zumindest teilweise abdecken sowie Öffnungsschlitze (61, 62) zur Durchführung der Kontaktmesser einer Sicherung aufweisen,
**dadurch gekennzeichnet,**
**dass** der Befestigungssteg (1) mindestens eine nutförmige Aufnahme (10) für eine Stromsammelschiene (11) aufweist, in welche eine Kontaktzunge (13) eines der Aufnahmekontaktabschnitte (8, 9) eingesetzt ist, und
**dass** an mindestens einer Stirnseite (2, 3) des Befestigungssteges (1) mindestens eine entlang der Achse des Befestigungssteges (1) verlaufende Nut (30a, 30b) vorgesehen ist, und
**dass** ein Halteelement (5) vorgesehen ist, welches eine Steckeinrichtung (26, 27, 28) aufweist, die mit der mindestens einen Nut (30a, 30b) in Eingriff verbringbar ist.

2. Sicherungsaufnahmevorrichtung nach Anspruch 1,
**dadurch gekennzeichnet,**
**dass** die Steckeinrichtung (26, 27, 28) durch von dem Halteelement (5) abstrebende Zungen gebildet ist.

3. Sicherungsaufnahmevorrichtung nach Anspruch 1 oder 2,
**dadurch gekennzeichnet,**
**dass** das Halteelement (5) bei Eingriff mit dem Befestigungssteg (1) in der Ebene des Befestigungssteges (1) angeordnet ist.

4. Sicherungsaufnahmevorrichtung nach wenigstens einem der vorangehenden Ansprüche,
**dadurch gekennzeichnet,**
**dass** an der dem Halteelement (5) zugewandten Seite des Befestigungssteges (1) eine Kontaktzunge (19) vorgesehen ist, die über den Befestigungssteg (1) vorsteht.

5. Sicherungsaufnahmevorrichtung nach Anspruch 4,
**dadurch gekennzeichnet,**
**dass** die vom Befestigungssteg (1) abstehende Kontaktzunge (19) eine Öffnung (40) aufweist.

6. Sicherungsaufnahmevorrichtung nach wenigstens einem der vorangehenden Ansprüche,
**dadurch gekennzeichnet,**
**dass** das Halteelement (5) mit einer Befestigungseinrichtung (34, 36) versehen ist zur Aufnahme von Schraubmitteln (42).

7. Sicherungsaufnahmevorrichtung nach wenigstens einem der vorangehenden Ansprüche,
**dadurch gekennzeichnet,**
**dass** das Halteelement (5) als Befestigungseinrichtung eine in einen Befestigungsblock eingesetzte Mutter (36) aufweist, die zur Aufnahme von Schraubmitteln (42) dient, die durch die Öffnung (40) der Kontaktzunge (19) durchgeführt sind.

8. Sicherungsaufnahmevorrichtung nach wenigstens einem der vorangehenden Ansprüche,
**dadurch gekennzeichnet,**
**dass** das Halteelement (5) Anschläge oder Begrenzungselemente (37) aufweist.

9. Sicherungsaufnahmevorrichtung nach Anspruch 8,
**dadurch gekennzeichnet,**
**dass** an dem Halteelement (5) ein Bauteil angeordnet ist, das durch die Anschläge oder Begrenzungselemente (37) gegenüber einer Basisplatte (25) des Halteelementes (5) gesichert ist.

10. Sicherungsaufnahmevorrichtung nach wenigstens einem der vorangehenden Ansprüche,
**dadurch gekennzeichnet,**
**dass** der Befestigungssteg (1) mit einer Steckaufnahme (30a, 30b) versehen ist, die zur Aufnahme der Steckeinrichtung (26, 27, 28) ausgebildet ist.

11. Sicherungsaufnahmevorrichtung nach wenigstens einem der vorangehenden Ansprüche,
**dadurch gekennzeichnet,**
**dass** die von dem Befestigungssteg (1) vorstehende Kontaktzunge (19) senkrecht und zur Ebene der Stromsammelschiene (11) beabstandet angeordnet ist und mit einem der Aufnahmekontaktabschnitte (8, 9) in elektrischer Verbindung steht.

12. Sicherungsaufnahmevorrichtung nach wenigstens einem der vorangehenden Ansprüche,
**dadurch gekennzeichnet,**
**dass** die Nut (10) zur Aufnahme der Stromsammelschiene (11) quer zur Längsachse des Befestigungsstegs (1) ausgerichtet ist.

13. Sicherungsaufnahmevorrichtung nach wenigstens einem der vorangehenden Ansprüche,
**dadurch gekennzeichnet,**
**dass** die in die Nut (10) eingesetzte Kontaktzunge (13) etwa Z-förmig ausgebildet und sowohl mit einem Kontaktabschnitt (8) als auch mit der Stromsammelschiene (11) in elektrischer Verbindung steht.

14. Sicherungsaufnahmevorrichtung nach wenigstens einem der vorangehenden Ansprüche,
**dadurch gekennzeichnet,**
**dass** auf dem Befestigungssteg zumindest im Bereich der nutförmigen Aufnahmen (10) Abdeck-Kappen (15, 24) vorgesehen sind, die eine Länge haben, welche größer als die Breite des Befestigungssteges (1) gewählt ist.

15. Sicherungsaufnahmevorrichtung nach wenigstens einem der vorangehenden Ansprüche,
**dadurch gekennzeichnet,**
**dass** die die Aufnahmekontaktabschnitte (8, 9) überdeckenden Isolier-Kappen (54, 55) eine Breite aufweisen, die etwa gleich der Breite des Befestigungssteges (1) ist.

16. Sicherungsaufnahmevorrichtung nach wenigstens einem der vorangehenden Ansprüche,
**dadurch gekennzeichnet,**
**dass** die als Berührungsschutz vorgesehenen, die Stromsammelschiene (11) abdeckenden Kappen (15, 24) mit mindestens einem entfernbaren Ausgleichssteg (17, 24) versehen sind.

17. Sicherungsaufnahmevorrichtung nach wenigstens einem der vorangehenden Ansprüche,
**dadurch gekennzeichnet,**
**dass** die Sicherungsaufnahmevorrichtung für Anschlusskästen von Photovoltaikanlagen ausgebildet ist.

18. Sicherungsaufnahmevorrichtung nach Anspruch 9,
wobei das Bauteil als ein Wandler (6) ausgebildet ist.

## Claims

1. Fuse-receiving device having a fastening web (1) and receiving contact portions (8, 9), disposed at ends of the fastening web (1), for contact blades of fuses, having insulating caps (54, 55) which are placed onto the fastening web (1), at least partially cover the receiving contact portions (8, 9) and also comprise opening slits (61, 62) for passage of the contact blades of a fuse,
**characterised in that**
the fastening web (1) comprises at least one groove-shaped receiver (10) for an electric busbar (11), into which a contact tongue (13) of one of the receiving contact portions (8, 9) is inserted, and
that at least one groove (30a, 30b) extending along the axis of the fastening web (1) is provided on at least one end face (2, 3) of the fastening web (1), and
that a holding element (5) is provided which comprises a plug device (26, 27, 28) which can be brought into engagement with the at least one groove (30a, 30b).

2. Fuse-receiving device as claimed in claim 1, **characterised in that** the plug device (26, 27, 28) is formed by tongues projecting from the holding element (5).

3. Fuse-receiving device as claimed in claim 1 or 2, **characterised in that**, when engaged with the fastening web (1), the holding element (5) is disposed in the plane of the fastening web (1).

4. Fuse-receiving device as claimed in at least one of the preceding claims, characterised in thata contact tongue (19), which projects beyond the fastening web (1), is provided on the side of the fastening web (1) facing the holding element (5).

5. Fuse-receiving device as claimed in claim 4, **characterised in that** the contact tongue (19) protruding from the fastening web (1) comprises an opening (40).

6. Fuse-receiving device as claimed in at least one of the preceding claims, **characterised in that** the holding element (5) is provided with a fastening device (34, 36) for receiving screw means (42).

7. Fuse-receiving device as claimed in at least one of the preceding claims, **characterised in that** the holding element (5) comprises, as a fastening device, a nut (36) which is inserted into a fastening block and serves to receive screw means (42) which are guided through the opening (40) in the contact tongue (19).

8. Fuse-receiving device as claimed in at least one of the preceding claims, **characterised in that** the holding element (5) comprises stops or limiting elements (37).

9. Fuse-receiving device as claimed in claim 8, **characterised in that** a component is disposed on the holding element (5) and is secured with respect to a base plate (25) of the holding element (5) by the stops or limiting elements (37).

10. Fuse-receiving device as claimed in at least one of the preceding claims, **characterised in that** the fastening web (1) is provided with a plug receiver (30a, 30b) which is formed to receive the plug device (26, 27, 28).

11. Fuse-receiving device as claimed in at least one of the preceding claims, **characterised in that** the contact tongue (19) projecting from the fastening web (1) is disposed vertically and at a distance from the plane of the electric busbar (11) and is electrically connected to one of the receiving contact portions (8, 9).

12. Fuse-receiving device as claimed in at least one of the preceding claims, **characterised in that** the groove (10) for receiving the electric busbar (11) is oriented transversely with respect to the longitudinal axis of the fastening web (1).

13. Fuse-receiving device as claimed in at least one of the preceding claims, **characterised in that** the contact tongue (13) inserted into the groove (10) is approximately Z-shaped and is electrically connected both to a contact portion (8) and also to the electric busbar (11).

14. Fuse-receiving device as claimed in at least one of the preceding claims, **characterised in that** covering caps (15, 24), which are of a length selected to be greater than the width of the fastening web (1), are provided on the fastening web at least in the region of the groove-shaped receivers (10).

15. Fuse-receiving device as claimed in at least one of the preceding claims, **characterised in that** the insulating caps (54, 55), which cover the receiving contact portions (8, 9), are of a width which is approximately equal to the width of the fastening web (1).

16. Fuse-receiving device as claimed in at least one of the preceding claims, **characterised in that** the caps (15, 24), which are provided as contact protection and which cover the electric busbar (11), are provided with at least one removable compensating web (17, 23).

17. Fuse-receiving device as claimed in at least one of the preceding claims, **characterised in that** the fuse-receiving device is designed for junction boxes of photovoltaic installations.

18. Fuse-receiving device as claimed in claim 9, wherein the component is designed as a converter (6).

## Revendications

1. Dispositif de logement de fusible, comportant une barrette de fixation (1) et des sections de contact de logement (8, 9) disposées sur la face frontale sur la barrette de fixation (1) pour des lames de contact de fusibles, avec des capuchons isolants (54, 55), qui sont appliqués sur la barrette de fixation (1) et qui recouvrent au moins partiellement les sections de contact de logement (8, 9) et présentent des fentes d'ouverture (61, 62) pour le passage des lames de contact d'un fusible,
**caractérisé par le fait que**
la barrette de fixation (1) présente au moins un logement en forme de rainure (10) pour une barre collectrice de courant (11), dans laquelle est insérée une languette de contact (13) d'une des sections de contact de logement (8, 9), et
qu'au moins une rainure (30a, 30b) est prévue le long de l'axe de la barrette de fixation (1) au niveau d'au moins une face frontale (2, 3) de la barrette de fixation (1), et
qu'un élément de retenue (5) est prévu, qui présente un dispositif enfichable (26, 27, 28), qui peut être amené en prise avec l'au moins une rainure (30a, 30b).

2. Dispositif de logement de fusible selon la revendication 1, **caractérisé par le fait que** le dispositif enfichable (26, 27, 28) est formé par des languettes partant de l'élément de retenue (5).

3. Dispositif de logement de fusible selon la revendication 1 ou 2, **caractérisé par le fait que** l'élément de retenue (5) est disposé lors de l'emboîtement avec la barrette de fixation (1) dans le plan de la barrette de fixation (1).

4. Dispositif de logement de fusible selon au moins l'une des revendications précédentes, **caractérisé par le fait qu'**une languette de contact (19) est prévue au niveau de la face faisant face à l'élément de retenue (5) de la barrette de fixation (1), qui dépassent au-delà de la barrette de fixation (1).

5. Dispositif de logement de fusible selon la revendication 4, **caractérisé par le fait que** la languette de contact (19) partant de la barrette de fixation (1) présente une ouverture (40).

6. Dispositif de logement de fusible selon au moins l'une des revendications précédentes, **caractérisé par le fait que** l'élément de retenue (5) est pourvu d'un moyen de fixation (34, 36) pour le logement de moyens de vissage (42).

7. Dispositif de logement de fusible selon au moins l'une des revendications précédentes, **caractérisé par le fait que** l'élément de retenue (5) présente en tant que moyen de fixation un écrou (36) inséré dans un bloc de fixation, qui sert au logement de moyens de vissage (42), qui sont passés par l'ouverture (40) de la languette de contact (19).

8. Dispositif de logement de fusible selon au moins l'une des revendications précédentes, **caractérisé par le fait que** l'élément de retenue (5) présente des butées ou des éléments de délimitation (37).

9. Dispositif de logement de fusible selon la revendication 8, **caractérisé par le fait qu'**un composant est disposé au niveau de l'élément de retenue (5), qui est sécurisé par les butées ou les éléments de délimitation (37) par rapport à une plaque de base (25) de l'élément de retenue (5).

10. Dispositif de logement de fusible selon au moins l'une des revendications précédentes, **caractérisé par le fait que** la barrette de fixation (1) est pourvue d'un logement d'enfichage (30a, 30b), qui est réalisé pour le logement du dispositif enfichable (26, 27, 28).

11. Dispositif de logement de fusible selon au moins l'une des revendications précédentes, **caractérisé par le fait que** la languette de contact (19) faisant saillie à partir de la barrette de fixation (1) est disposée perpendiculairement à et à distance du plan de la barre collectrice de courant (11) et se trouve en liaison électrique avec une des sections de contact de logement (8, 9).

12. Dispositif de logement de fusible selon au moins l'une des revendications précédentes, **caractérisé par le fait que** la rainure (10) pour le logement de la barre collectrice de courant (11) est orientée transversalement à l'axe longitudinal de la barrette de fixation (1).

13. Dispositif de logement de fusible selon au moins l'une des revendications précédentes, **caractérisé par le fait que** la languette de contact (13) insérée dans la rainure (10) est réalisée sous forme approximative de Z et se trouve en liaison électrique autant avec une section de contact (8) qu'avec la barre collectrice de courant (11).

14. Dispositif de logement de fusible selon au moins l'une des revendications précédentes, **caractérisé par le fait que** des capuchons de recouvrement (15, 24) sont prévus sur la barrette de fixation au moins au niveau des logements en forme de rainure (10), qui ont une longueur qui est choisie supérieure à la largeur de la barrette de fixation (1).

15. Dispositif de logement de fusible selon au moins l'une des revendications précédentes, **caractérisé par le fait que** les capuchons isolants (54, 55) recouvrant les sections de contact de logement (8, 9) présentent une longueur qui est approximativement identique à la largeur de la barrette de fixation (1).

16. Dispositif de logement de fusible selon au moins l'une des revendications précédentes, **caractérisé par le fait que** les capuchons (15, 24) prévus en tant que protection contre le contact recouvrant la barre collectrice de courant (11) sont pourvus d'au moins une barrette de compensation (17, 23) amovible.

17. Dispositif de logement de fusible selon au moins l'une des revendications précédentes, **caractérisé par le fait que** le dispositif de logement de fusible est réalisé pour des boîtes de raccordement d'installations photovoltaïques.

18. Dispositif de logement de fusible selon la revendication 9, le composant étant réalisé en tant que convertisseur (6) .
